# EUROPEAN PATENT APPLICATION

(11) **EP 4 035 941 A1**
(43) Date of publication of application: **03.08.2022**
(21) Application number: 22152968.8
(22) Date of filing: 24.01.2022
(51) Int. Cl.: B60Q 1/00, B60Q 1/26, B60Q 1/50, F21S 43/14, F21S 43/15, F21S 43/31, F21S 43/40, F21W 103/00, F21W 104/00

(54) **AUTOMOTIVE LIGHTING AND/OR SIGNALLING DEVICE**

(30) Priority: 27.01.2021 IT 202100001616
(71) Applicant: Marelli Automotive Lighting Italy S.p.A., 10078 Venaria Reale (TO) (IT)
(72) Inventor: IANNACONE, Federico, I-10078 Venaria Reale, TORINO (IT); SACCA', Alessandro, I-10078 Venaria Reale, TORINO (IT)
(74) Representative: Mitola, Marco

(57) **Abstract**

A lighting and/or signalling device (4), in particular for the automotive sector, comprising:
- a container body (8) that delimits a containment seat (12) closed by a lenticular body (20),
- said containment seat (12) housing at least a first light source (32) structured to emit a first light beam,
- a first reflector element (40) comprising a semitransparent front wall (44) suitable to intercept and reflect the first light beam along a prevailing propagation direction (X-X),
the lighting and/or signalling device (4) being characterized in that said at least one first light source (32) comprises a plurality of mini-LEDs or micro-LEDs placed on a holder/electronic board (24) extending at least partially curved, each mini-LED or micro-LED forming a portion of said first light beam, which defines a pattern/message/figure on said front wall (44).

## Description

### FIELD OF APPLICATION

The present invention relates to an automotive lighting and/or signalling device.

### BACKGROUND ART

The term automotive lighting and/or signalling device here is used with a very broad meaning in order to comprise an automotive light, whether a rear or front automotive light, the latter also called headlight or headlamp.

As known, an automotive light is a device intended to provide at least one lighting and/or signalling function of the vehicle, such as a position light, a turn signal, a brake light, a rear fog lamp, a reversing light, a dipped beam headlamp, a main beam headlamp, and the like.

Furthermore, the term is also understood to comprise a map light, a light for a dashboard or part thereof; thus, the automotive lighting and/or signalling device may be placed either inside or outside the vehicle.

As known, said automotive lighting and/or signalling devices substantially comprise a hollow container body, which internally accommodates at least one light source and which is closed by an external lenticular body.

The lighting and/or signalling devices on the market today are provided with lighting assemblies in which the light source, in particular of the LED type, is coupled, for example to at least one light guide which receives the light beam produced by the light source and transmits it towards the lenticular body.

Over the last few years, said lighting and/or signalling devices have to perform not only photometric functions, such as, for example the function of position lights, turn signals, brake lights, reversing lights, rear fog lamps, and the like, but they have also to perform merely aesthetical and/or information communicating functions.

In other words, lighting and/or signalling devices have now become an integral and characterizing part of the design of a vehicle and are used to perform several functions with respect to the specific ones associated with automotive lighting. In greater detail, lights having an aesthetical and or messaging nature are associated with the classical lighting and/or signalling lights of a lighting and/or signalling device. However, making such additional lights often is hindered by the curved geometry of the lighting and/or signalling device. For example, RGB light sources intended to create a pattern/message/figure to be displayed sometimes do not have an adequate place within the lighting and/or signalling device in order to create the desired image.

### PRESENTATION OF THE INVENTION

It is the object of the present invention to provide a lighting and/or signalling device which is able to perform both the photometric functions and additional aesthetical functions described above while ensuring reduced production costs and increased reliability.

Such a need is met by an automotive lighting and/or signalling device according to claim 1.

Other embodiments of the present invention are described in the dependent claims.

### DESCRIPTION OF THE DRAWINGS

Further features and advantages of the present invention will be more comprehensible from the following description of preferred and non-limiting embodiments thereof, in which:

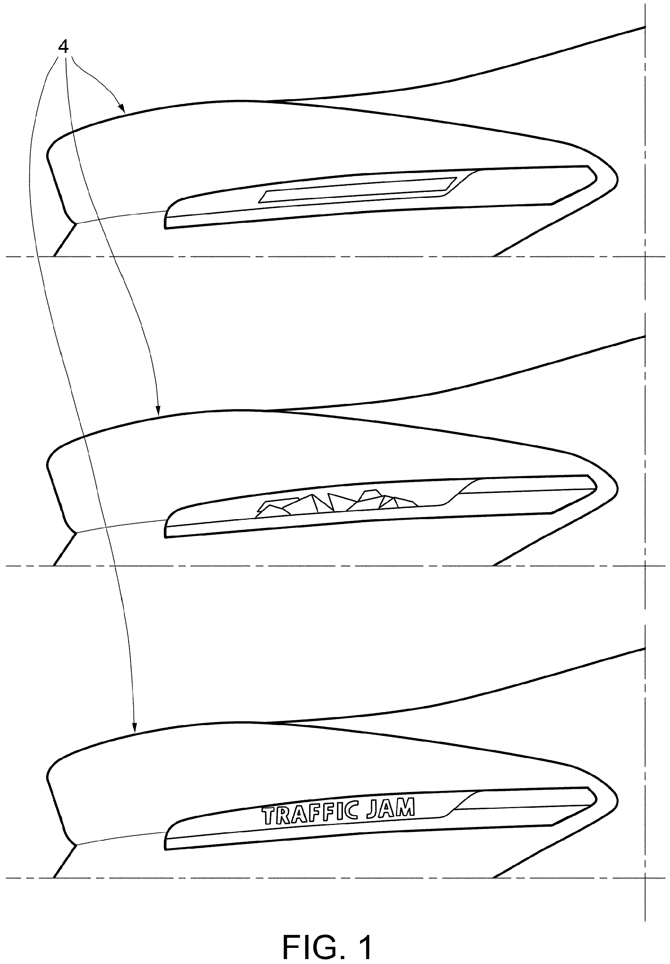

Figure 1 shows a perspective view of a vehicle which incorporates, on the rear portion thereof, a lighting and/or signalling device according to an embodiment of the present invention, in different lighting configurations;

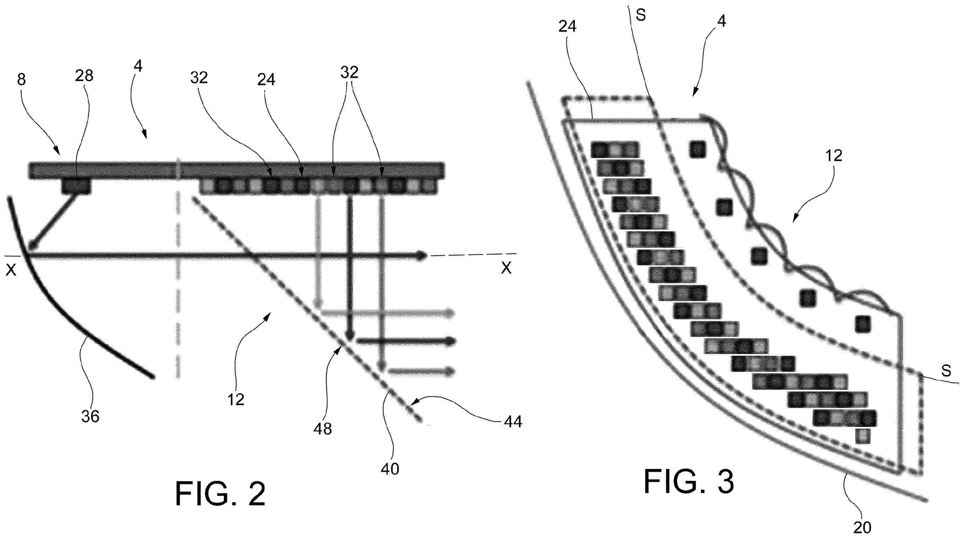

Figures 2 to 3 show sectional views of the lighting and/or signalling device in Figure 1.

The elements or parts of elements common to the embodiments described below will be indicated using the same numerals.

### DETAILED DESCRIPTION

With reference to the aforesaid drawings, a lighting and/or signalling device, such as an automotive light, to which the following disclosure refers without however losing in generality, is indicated as a whole by numeral 4.

As mentioned above, the term lighting and/or signalling device may indifferently mean a rear automotive light or a front automotive light, the latter also called a headlight or headlamp, comprising an external vehicle light having a lighting and/or signalling function, such as for example a position light, which may be a front, rear, side position light, a turn signal light, a brake light, a rear fog lamp, a main beam headlamp, a dipped beam headlamp, and the like.

Moreover, the term lighting and/or signalling device also means an indoor map light, a light for a dashboard or part thereof, a display, etc.

Thus, as better described below, the device in its signalling function may comprise the possibility of sending light signals, logos, but also words and lit messages of any kind.

The lighting and/or signalling device 4 comprises a container body or housing 8, usually made of polymeric material, such as, for example acrylonitrile butadiene styrene or ABS, which conventionally allows the fixing of the lighting and/or signalling device 4 to the related vehicle or to any type of support.

For the purposes of the present invention, the container body or housing 8 may have any shape and size, and also positioning: for example, the container body 8 may also not be directly connected to the bodywork or other external fixings of the associable vehicle.

As shown, the container body 8 may also be fixed inside the vehicle, for example on the instrument panel, on the dashboard, on the parcel shelf, and so on.

The container body 8 delimits a containment seat 12 which accommodates a plurality of components of said lighting and/or signalling device.

The containment seat 12 in particular accommodates a plurality of light sources adapted to emit a light beam, arranged and supported in said containment seat 12, as better described below.

For example, a lenticular body 20 may be placed at least partially closing the container body 8, so as to close said containment seat 12 which accommodates the at least one light source 16.

For the purposes of the present invention, the lenticular body 20 may be external to the lighting and/or signalling device 4, so as to define at least one external wall of the lighting and/or signalling device directly subjected to the atmosphere.

According to possible embodiments, the material of the lenticular body 20 is of polymeric type, i.e., a resin such as PMMA (poly methyl methacrylate, PC (polycarbonate) and the like. Said material of the lenticular body is therefore at least partially transparent or semitransparent or translucent, one or more opaque portions being able to be included.

The lenticular body 20 is thus adapted to be at least partially crossed by the light beam produced by the light sources, which is transmitted outside the containment seat 12, as better described below.

The lighting and/or signalling device 4 comprises an electronic board or printed circuit board 24 which supports a first light source 32 performing a first lighting function by emitting a first light beam and a second light source 28 performing a second lighting function by emitting a second light beam.

The lighting and/or signalling device 4 further comprises a first reflector element 40 which comprises a front wall 44 which intercepts and reflects the first light beam emitted by the first light source 32 along said prevailing propagation direction X-X and a second reflector 36 which intercepts and reflects the second light beam emitted by the second light source 28 in a prevailing propagation direction X-X.

The second reflector element 36 is located upstream of the first reflector element 40 along said prevailing propagation direction X-X so that the second light beam strikes a back wall 48 of the first reflector element 40 opposite to said front wall 44.

The second light source 28 is located upstream of the first light source 32 with respect to said prevailing propagation direction X-X.

Advantageously, said first reflector element 40 is a semitransparent element so as to reflect the first light beam striking its front wall 44 and to be simultaneously crossed by the second light beam emitted by the second light source 28 striking its rear wall 48.

The second light source 28 preferably comprises an LED light source or a laser source.

The first light source 32 comprises a plurality of mini-LEDs, micro-LEDs.

Preferably, said first and second light sources 32, 28 are adjacent and are reciprocally independently operable, each emitting its own light beam. In particular, the second light sources are to be reciprocally independently operable in order to display any type of image and/or animation.

Said electronic board or printed circuit board 24 may be a planar support having a plate configuration; said first light sources 32 preferably are arranged on said plate at least partially along curvilinear trajectories S-S.

Preferably, the first light sources 32 comprise a plurality of mini-LEDs or micro-LEDs, preferably of RGB type, arranged along said plate, so as to create a pattern/message/figure reflected on the front wall 44 of the first reflector element 40. In other words, a pattern/message/figure may be created, which implies a well-defined arrangement of the RGB type light sources, also in the presence of curvilinear profiles of the lighting and/or signalling device 4, each RGB type mini-LED being freely placeable according to needs without position constraints.

Said plate may also in turn be shaped so as to be a curvilinear element.

Preferably, the first and second light sources 32, 28 are connected or powered so as to be operable separately and/or together, so as to be able to emit their respective light beams separately or simultaneously.

Thereby, the respective light sources may be simultaneously or separately operated, and also a specific animation obtained by conveniently operating the plurality of first light sources 32 may also support a classical function of light signalling (such as, for example a stop signal).

The electronic board or printed circuit board 24 may be fixed to the container body 8 or to a support structure in turn fixed to the container body 8.

As may be appreciated by what is described, the present invention allows the drawbacks introduced in the known art to be overcome.

In particular, the automotive lighting and/or signalling device according to the present invention allows both the photometric functions and the aesthetical functions to be performed while keeping curbed the related production and assembly costs.

Not only may said lighting and/or signalling device perform the classical photochromic functions (for example, position light, stop light, reverse light, turn signal light) conventionally by means of the first light sources, but it may also provide further signalling functions by means of animations, written words, various symbols, by virtue of a suitable switching ON of the second micro-LED or mini-LED light sources.

In fact, a curved display is obtained which follows the curvature of the lenticular body and therefore, for example of the bodywork, so as to be perfectly integrated in the vehicle body on which the lighting and/or signalling device is applied.

Moreover, the automotive lighting and/or signalling device according to the present invention is reliable.

Those skilled in the art, with the object of meeting contingent and specific needs, can make several changes and variants to the lighting and/or signalling devices described above, moreover all contained within the scope of the invention, which is defined by the following claims.

## Claims

1. Lighting and/or signalling device (4), in particular for the automotive sector, comprising:
- a container body (8) that delimits a containment seat (12) closed by a lenticular body (20),
- said containment seat (12) housing at least a first light source (32) structured to emit a first light beam,
- a first reflector element (40) comprising a semitransparent front wall (44) suitable to intercept and reflect the first light beam along a prevailing propagation direction (X-X),
the lighting and/or signalling device (4) being **characterized in that** said at least one first light source (32) comprises a plurality of mini-LEDs or micro-LEDs placed on a holder/electronic board (24) extending at least partially curved, each mini-LED or micro-LED forming a portion of said first light beam, which defines a pattern/message/figure on said front wall (44).

2. The lighting and/or signalling device (4) according to claim 1, wherein the mini-LEDs or micro-LEDs are of the RGB type.

3. The lighting and/or signalling device (4) according to claim 1 or 2, comprising:
- a lenticular body (20) which closes the containment seat (12) and is suitable to be at least partially crossed by the light beam produced by said light source so as to transmit said light beam outside the containment seat (12),
- a second light source (28) performing a second lighting function emitting a second light beam,
- wherein the device (4) comprises a second reflector element (36) that intercepts and reflects the second light beam in a prevailing propagation direction (X-X),
- wherein the second reflector element (36) is located upstream of the first reflector element (40) along said prevailing propagation direction (X-X), so that the second light beam strikes a back wall (48) of the first reflector element (40) opposite said front wall (44),
- wherein the front wall (44) of said second reflector element (40) is a semi-transparent element so as to reflect the second light beam striking its front wall (44) and to be crossed by the first light beam striking its rear wall (48).

4. The lighting and/or signalling device (4) according to claim 1, 2 or 3, wherein the second light source (28) is located upstream of the first light source (32) with respect to said prevailing propagation direction (X-X).

5. The lighting and/or signalling device (4) according to claim 2, 3 or 4, wherein the second light source (28) comprises a LED light source or a laser source.

6. The lighting and/or signalling device (4) according to any of the claims from 1 to 5, wherein said first and second light sources (32,28) are adjacent and are reciprocally independently operable, each emitting its own light beam.

7. The lighting and/or signalling device (4) according to any of the claims from 1 to 6, wherein said electronic board or printed circuit board (24) is a planar element having a plate configuration and wherein said first light sources (32) are arranged on said plate at least partially along curvilinear trajectories.

8. The lighting and/or signalling device (4) according to claim 7, wherein said plate is a curvilinear element.

9. The lighting and/or signalling device (4) according to any of the claims from 1 to 8, wherein the first and second light sources (32,28) are connected or powered so as to be operable separately and/or together, so as to be able to emit their respective light beams separately or simultaneously.

10. The lighting and/or signalling device (4) according to any of the claims from 1 to 9, wherein said electronic board or printed circuit board (24) is fixed to the container body (8) or to a support structure in turn fixed to the container body (8).
